# EUROPEAN PATENT SPECIFICATION

(11) **EP 3 331 284 B1**
(45) Date of publication and mention of the grant of the patent: **25.08.2021**
(21) Application number: 16201823.8
(22) Date of filing: 01.12.2016
(51) Int. Cl.: H04W 48/04, H04M 1/725, H04W 88/18, H04W 84/04, H04W 88/14

(54) **SYSTEM AND METHOD FOR CONTROLLING USE OF A MOBILE DEVICE IN A HETEROGENEOUS NETWORK**
SYSTEM UND VERFAHREN ZUR STEUERUNG DER VERWENDUNG EINER MOBILEN VORRICHTUNG IN EINEM HETEROGENEN NETZWERK
SYSTÈME ET PROCÉDÉ DE COMMANDE DE L'UTILISATION D'UN DISPOSITIF MOBILE DANS UN RÉSEAU HÉTÉROGÈNE

(43) Date of publication of application: 06.06.2018
(73) Proprietor: Vestel Elektronik Sanayi ve Ticaret A.S., 45030 Manisa (TR)
(72) Inventor: KIRISKEN, Barbaros, 45030 Manisa (TR)
(74) Representative: Kehl, Ascherl, Liebhoff & Ettmayr Patentanwälte Partnerschaft mbB

(56) References cited:
- US-A1- 2008 095 097
- US-A1- 2009 170 528
- US-A1- 2013 078 979
- US-A1- 2013 231 101
- US-B2- 9 185 135

## Description

The present invention relates to a system for controlling use of a mobile device in a heterogeneous network according to claim 1, a method of controlling use of a mobile device in a heterogeneous network according to claim 3 and a computer program product according to claim 10. More particularly, the present invention relates to such a system and method, wherein the heterogeneous network at least comprises a macro cell and a small cell having a lesser coverage than the macro cell.

### Background of the Invention

A heterogeneous network for mobile communications comprises cells of more than one type. A first type of cell is a traditional macro cell, which is a radio access node which can typically have a coverage of up to about 35 kilometres. However, as both the density of mobile devices and the data rates which individual mobile devices use for communications have increased dramatically in recent years, it has become increasingly difficult for a traditional macro cell to accommodate communications between large numbers and/or high densities of mobile devices, for example in a city-centre environment, where the coverage of traditional macro cells can also be restricted by obstacles and multiple reflections from buildings. Accordingly, a second type of cell, known as a small cell, has become increasingly common in recent times as well. A small cell is a radio access node with a coverage of from only a few metres, such as 5 or 10 metres, up to only a few kilometres, such as about 1, 2 or 5 kilometres. Small cells come in various different types, such as a micro cell, which typically has a coverage of only 1 or 2 kilometres, a pico cell, which typically has a coverage of up to about a few hundred metres, enough to cover a large building or institution, such as a school, hospital, railway station or shopping mall, and a femtocell, which typically has a coverage of only a few tens of metres, sufficient for a smaller building, such as a cafe, bar, office or home. As used herein, however, the terms "macro cell" and "small cell" are used as relative terms only, which respectively denote a cell having a coverage of a first size (the macro cell) and a cell having a coverage of a second size which is less than that of the first size (the small cell), without any numerical limitations on the sizes of the coverage in either case.

On the one hand, it would be desirable for the use of mobile devices in certain environments, buildings or institutions to be subject to rules and/or policies for their use. In the present context, the term "policy" means a mode of using the mobile device which is recommended or advised, but is not mandatory, whereas the term "rule" means a mode of using the mobile device which is necessary or mandated. For example, it would be desirable for the use of a mobile device in a cinema to make or receive voice calls to be discouraged (a policy) or prevented (a rule). On the other hand, however, it is not at present possible to check whether such rules and/or policies are being correctly applied or used in such environments.

WO 2003/037002 describes a muting system which enables wireless communication devices which enter a silent zone to generate a silent zone advisory message, and which subsequently mutes the wireless communication devices by instructing the wireless communication devices to enter a silent mode. In this instance, however, the silent zone is defined by a wi-fi zone provided by a wireless router, which is not a cell of a heterogeneous network.

US 2008/0095097 describes a method to control radio devices based on user equipment policy requirements, wherein a wireless usage policy manager enforces predetermined usage policies by automatically disabling or limiting the operation of wireless enabled devices as they enter the predetermined boundaries of a wireless policy management environment.

US 2013/0078979 describes apparatus and methods for enforcement of policies upon a wireless device, for example when the wireless device is associated with a certain acess point.

### Object of the Invention

### Description of the Invention

The invention is set out in the appended set of claims.

The object of the invention is solved by a system for controlling use of a mobile device in a heterogeneous network according to claim 1. The heterogeneous network at least comprises a macro cell and a small cell. The system at least comprises a macro cell base station, a small cell base station, and a macro-cell-base-station-to-small-cell-base-station switching centre storing at least one rule and/or policy for use of the mobile device within the small cell. The small cell base station has a coverage less than that of the macro cell base station. The small cell base station is also configured to apply the at least one rule and/or policy to use of the mobile device in the small cell and to transmit the at least one rule and/or policy to the mobile device if the mobile device is connected to the network via the small cell, for acceptance or rejection by the mobile device. The switching centre is configured to switch connection of the mobile device to the network from the small cell to the macro cell if the mobile device rejects the at least one rule and/or policy.

Thus, the use of the mobile device within the small cell can be controlled as desired, according to the at least one rule and/or policy, but the connection of the mobile device to the network via the macro cell can still be enabled, even if the connection of the mobile device to the network via the small cell is not. In this way, acceptance of and application of the at least one rule and/or policy to the mobile device can be made optional.

The switching centre can transfer connection of the mobile device to the network between the small cell base station and the macro cell base station in either direction: from small cell base station to macro cell base station, and from macro cell base station to small cell base station.

The mobile device may be a mobile telephone, tablet, pager, laptop computer or any other portable electronic device which is radio telecommunications-enabled.

The heterogeneous network may be a code division multiple access (CDMA) network, Global System for Mobile Communications (GSM) network, or any other radio telecommunications cellular network having heterogeneous cells as described.

The small cell base station not only applies the at least one rule and/or policy to use of the mobile device in the small cell, but also notifies the mobile device and/or a user of the mobile device of the existence of the at least one rule and/or policy prior to the at least one rule and/or policy being applied. The at least one rule and/or policy may be accepted or rejected by the mobile device according to a protocol of the device, or the at least one rule and/or policy may be accepted or rejected manually by the user of the device.

The switching centre may, for example, be a server. The server stores the at least one rule and/or policy for use of the mobile device within the small cell.

The switching centre may be configured to enable establishment of a connection of the mobile device to the network via the macro cell if the mobile device is not connected to the network via the small cell.

The present invention also relates to a method according to claim 3.

Preferably, the method further comprises the switching centre enabling establishment of a connection of the mobile device to the network via the macro cell if the mobile device is not connected to the network via the small cell.

Compliance of the use of the mobile device in accordance with the at least one rule and/or policy can also be checked at regular intervals and/or the at least one rule and/or policy can be changed as desired between contact events.

Preferably, the method further comprises establishing communication of the mobile device with the network via the small cell if the at least one rule and/or policy is accepted. Thus telecommunications between the mobile device and the network via the small cell can be regulated and controlled in accordance with the at least one rule and/or policy.

However, the at least one rule and/or policy for use of the mobile device within the small cell need not just relate to communications transmitted and/or received by the mobile device via the small cell, but may also relate to other functions of the mobile device, such as use of its camera. For example, if the mobile device at least comprises a camera, the method preferably further comprises establishing that the at least one rule and/or policy at least comprises preventing use of the camera within the coverage of the small cell. This may be advantageous if the coverage of the small cell is in a sensitive area, such as a research establishment, where company confidential information or copyright material is located, or a military or other governmental facility, where state secret or confidential information is located.

Alternatively or additionally, the at least one rule and/or policy for use of the mobile device within the small cell may relate to the effects of the mobile device on the environment within the small cell. The control of such effects may be for behavioural and/or safety reasons. For example, if the mobile device at least comprises a loudspeaker, the method preferably further comprises establishing that the at least one rule and/or policy at least comprises placing the mobile device in a silent mode within the coverage of the small cell. This may be advantageous when the coverage of the small cell comprises an office, a restaurant, a cinema or a theatre, for example. In a further possible example, if the mobile device at least comprises a flight-safe mode, the method preferably further comprises establishing that the at least one rule and/or policy at least comprises placing the mobile device in the flight-safe mode within the coverage of the small cell. This may be advantageous when the coverage of the small cell comprises an aeroplane or other location comprising equipment susceptible to interference from radio communications, such as a hospital or scientific research establishment.

Alternatively or additionally, the at least one rule and/or policy for use of the mobile device within the small cell may restrict the communications transmitted and/or received by the mobile device via the small cell in some way. For example, the mobile device may be allowed to receive voice calls and/or data within the small cell, but not to transmit voice calls and/or data from within the small cell. In such a case, the method preferably further comprises establishing that the at least one rule and/or policy at least comprises preventing the mobile device from transmitting voice calls and/or data from within the small cell.

The present invention further relates to a computer program product according to claim 10.

Further features, goals and advantages of the present invention will now be described in association with the accompanying drawings, in which exemplary components of the invention are illustrated. Components of the devices and methods according to the invention which are at least essentially equivalent to each other with respect to their function can be marked by the same reference numerals, wherein such components do not have to be marked or described in all of the drawings.

In the following description, the invention is described by way of example only with respect to the accompanying drawings.

### Brief Description of the Drawings

Fig. 1 is a schematic diagram of a system for controlling use of a mobile device in a heterogeneous network; and
Fig. 2 is a flow diagram of a method of controlling use of a mobile device in a heterogeneous network.

### Detailed Description

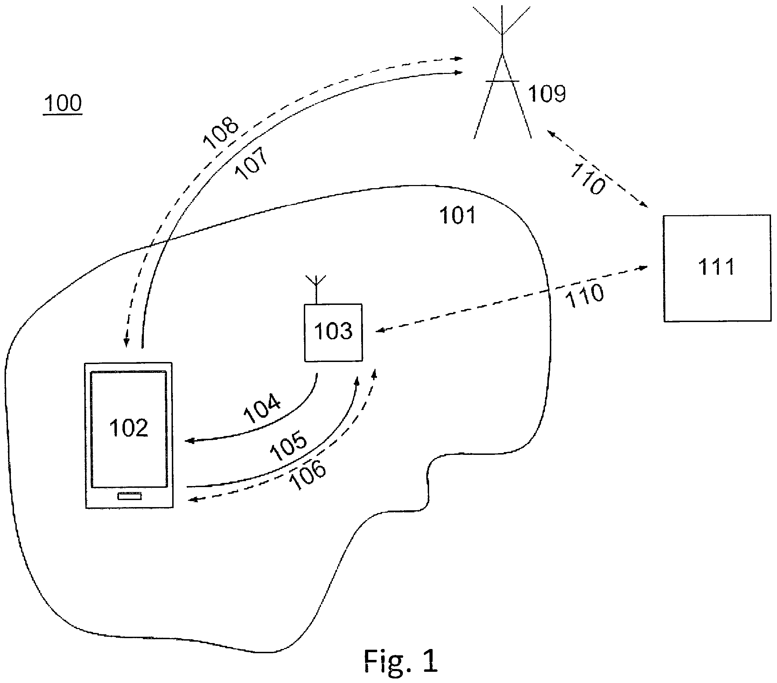

Fig. 1 schematically shows a system for controlling use of a mobile device in a heterogeneous network. The system comprises a macro cell base station 109 of a macro cell 100, a small cell base station 103, which provides coverage 101 smaller than the macro cell 100, and a macro-cell-base-station-to-small-cell-base-station switching centre 111. 102 is a mobile device within the coverage 101 provided by the small cell base station 103. The switching centre 111 is a server storing a set of rules and/or policies for use of the mobile device 102 within the coverage 101 of the small cell.

During operation of the system of Fig. 1, the small cell base station 103 transmits the rules and/or policies inside the small cell coverage area to the mobile device 102. Acceptance 105 of the rules and/or policies of the small cell is transmitted from the mobile device 102 to the small cell base station 103. In such a case, communication 106 of the mobile device 102 with the network is established within the small cell. On the other hand, rejection 107 of the rules and/or policies of the small cell is transmitted from the mobile device 102 to the macro cell base station 109. In such a case, communication within the small cell is terminated and communication 108 of the mobile device 102 with the network is established within the macro cell instead. Communications 110 between the switching centre 111 on the one hand and the small cell base station 103 and/or the macro cell base station 109 on the other ensure correct transfer of the mobile device 102 between the macro cell 100 and the small cell 101, and the application of the rules and/or policies within the small cell.

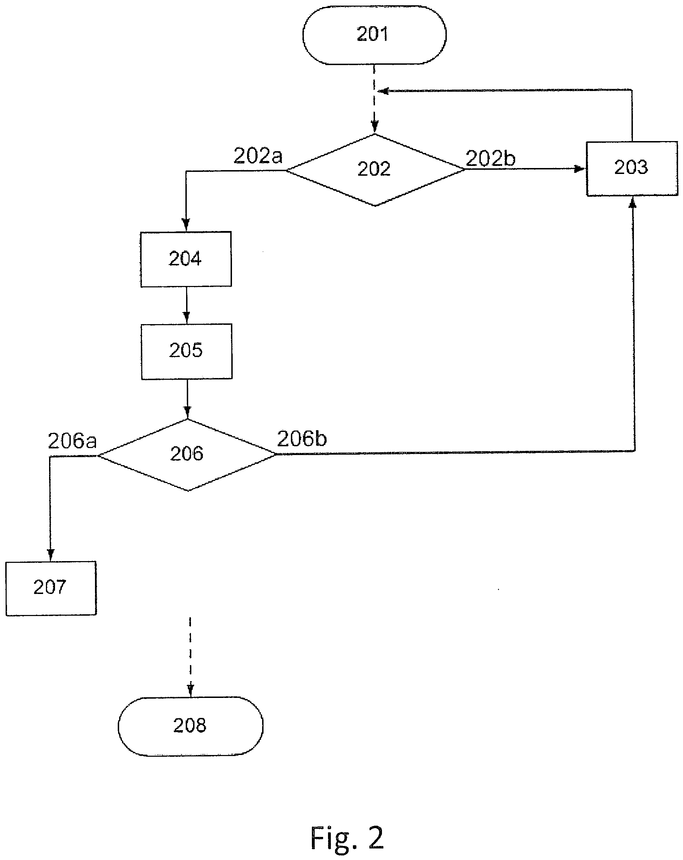

Fig. 2 is a flow diagram of a method of controlling use of a mobile device in a heterogeneous network, wherein the heterogeneous network comprises a macro cell and a small cell having a lesser coverage than the macro cell. In the flow diagram, lozenges represent the start or end of the method, rectangular boxes represent operations, and rhombuses represent decision processes. At 201, the method starts. At 202, the method determines whether the mobile device is connected to the network via the small cell. If the mobile device is determined 202b not to be connected to the network via the small cell, the method tries 203 to establish a connection of the mobile device to the network via the macro cell. On the other hand if the mobile device is determined 202a to be connected to the network via the small cell, the method establishes 204 rules and/or policies for use of the mobile device within the small cell, and transmits these rules and/or policies to the mobile device for acceptance or rejection 206. If the rules and/or policies are rejected 206b by the mobile device, the method terminates connection of the mobile device to the network via the small cell and tries 203 to establish a connection of the mobile device to the network via the macro cell. On the other hand, if the rules and/or policies are accepted 206a by the mobile device, the method applies the rules and/or policies to use of the mobile device in the small cell and establishes 207 communication of the mobile device with the network via the small cell. The method comprises repeatedly contacting the mobile device at predetermined intervals to determine 202 whether the mobile device is still connected to the network via the small cell, before at 208, the method stops. The rules and/or policies for use of the mobile device within the small cell which are applied in this method may relate to any of the examples described above, but are not limited thereto.

If the rules and/or policies of the small cell are rejected 206b by the mobile device, and the method tries 203 to establish a connection of the mobile device to the network via the macro cell, the method may nonetheless fail in establishing such a connection of the mobile device to the network via the macro cell, for example because of the greater distance of the mobile device to the macro cell base station than to the small cell base station. On the other hand, even if the method does succeed in establishing a connection of the mobile device to the network via the macro cell following rejection 206b of the rules and/or policies by the mobile device, the mobile device may still experience increased power consumption and/or a lower data rate than if the mobile device had accepted 206a the rules and/or policies of the small cell and were connected to the network via the small cell. These things may act as a possible incentive to the mobile device or to a user thereof to accept the rules and/or policies for use of the mobile device within the small cell.

In summary, therefore, the present disclosure provides a system for controlling use of a mobile device in a heterogeneous network, wherein the heterogeneous network at least comprises a macro cell and a small cell. The system at least comprises a macro cell base station, a small cell base station, a macro-cell-base-station-to-small-cell-base-station switching centre, and rules and/or policies for use of the mobile device within the small cell. The small cell base station has a coverage which is less than that of the macro cell, and is configured to apply the rules and/or policies to use of the mobile device in the small cell. The disclosure also provides a method of controlling use of a mobile device in a heterogeneous network, wherein the heterogeneous network at least comprises a macro cell and a small cell with a lesser coverage than the macro cell. The method at least comprises establishing rules and/or policies for use of the mobile device within the small cell and determining whether the mobile device is connected to the network via the small cell. If it is, the rules and/or policies are transmitted to the mobile device for acceptance or rejection. If they are accepted, the rules and/or policies are applied to use of the mobile device in the small cell, whereas if they are rejected, connection of the mobile device to the network via the small cell is terminated. Thus the use of the mobile device within the small cell can be controlled as desired, according to the rules and/or policies. The heterogeneous network may be any type of radio telecommunications cellular network having heterogeneous cells as described, and the mobile device may be in particular any type of radio telecommunications-enabled portable device.

### Reference Numerals:

| | | | |
|---|---|---|---|
| 100 | Macro cell | 201 | Start |
| 101 | Coverage area of small cell | 202 | Is mobile device connected within small cell? |
| 102 | Mobile device | | |
| 103 | Small cell base station | 202a | Yes |
| 104 | Transmission of rules and/or | 202b | No |
| | policies inside small cell coverage area | 203 | Try to establish connection via macro cell |
| 105 | Acceptance of rules and/or policies of small cell | 204 | Set rules and/or polices within small cell |
| 106 | Communication established within small cell | 205 | Transmit rules and/or polices within small cell |
| 107 | Rejection of rules and/or policies of small cell | 206 | Are rules and/or polices accepted and applied? |
| 108 | Communication within small cell terminated and communication within macro cell established | 206a | Yes |
| | | 206b | No |
| | | 207 | Establish communication via small cell |
| 109 | Macro cell base station | | |
| 110 | Macro cell/small cell base station to mobile switch centre communication | 208 | End |
| 111 | Switch centre | | |

## Claims

1. A system for controlling use of a mobile device (102) in a heterogeneous network, wherein the heterogeneous network at least comprises a macro cell (100) and a small cell (101), the system at least comprising:
a macro cell base station (109);
a small cell base station (103) having a coverage (101) less than that of the macro cell base station; and
a macro-cell-base-station-to-small-cell-base-station switching centre (111) storing at least one rule and/or policy (104) for use of the mobile device within the small cell;
wherein the small cell base station (103) is configured to apply the at least one rule and/or policy to use of the mobile device in the small cell and to transmit the at least one rule and/or policy to the mobile device (102) if the mobile device is connected to the network via the small cell, for acceptance or rejection by the mobile device;
**characterized in that**:
the switching centre (111) is configured to switch connection of the mobile device to the network from the small cell to the macro cell if the mobile device rejects the at least one rule and/or policy.

2. A system according to claim 1, wherein the switching centre (111) is further configured to enable establishment of a connection of the mobile device to the network via the macro cell if the mobile device is not connected to the network via the small cell.

3. A method of controlling use of a mobile device in a heterogeneous network, wherein the heterogeneous network at least comprises a macro cell having a macro cell base station (109), a small cell having a small cell base station (103) with a lesser coverage than the macro cell base station (109), and a macro-cell-base-station-to-small-cell-base-station switching centre (111) storing at least one rule and/or policy (104) for use of the mobile device within the small cell, the method at least comprising:
applying by the small cell base station (204) the at least one rule and/or policy for use of the mobile device within the small cell;
transmitting by the small cell base station the at least one rule and/or policy to the mobile device (205), if the mobile device is connected to the network via the small cell, for acceptance or rejection by the mobile device (206);
**characterized in**:
switching by the switching centre the connection of the mobile device to the network from the small cell to the macro cell, if the mobile device rejects the at least one rule and/or policy (206b).

4. A method according to claim 3, further comprising the switching centre (111) enabling (203) establishment of a connection of the mobile device to the network via the macro cell if the mobile device is not connected to the network via the small cell.

5. A method according to claim 3 or claim 4, further comprising establishing (207) communication of the mobile device with the network via the small cell if the at least one rule and/or policy is accepted (206a).

6. A method according to any one of claims 3 to 5, wherein the mobile device at least comprises a camera, and establishing the at least one rule and/or policy at least comprises preventing use of the camera within the coverage of the small cell.

7. A method according to any one of claims 3 to 6, wherein the mobile device at least comprises a loudspeaker, and establishing the at least one rule and/or policy at least comprises placing the mobile device in a silent mode within the coverage of the small cell.

8. A method according to any one of claims 3 to 7, wherein the mobile device at least comprises a flight-safe mode, and establishing the at least one rule and/or policy at least comprises placing the mobile device in the flight-safe mode within the coverage of the small cell.

9. A method according to any one of claims 3 to 8, wherein establishing the at least one rule and/or policy at least comprises preventing the mobile device from transmitting voice calls and/or data from within the small cell.

10. A computer program product comprising instructions which, when the program is executed by a processor of a switching centre, cause the processor to carry out the corresponding method steps of any one of claims 3 to 9.

## Patentansprüche

1. System zur Steuerung der Verwendung einer mobilen Vorrichtung (102) in einem heterogenen Netz, wobei das heterogene Netz mindestens eine Makrozelle (100) und eine Kleinzelle (101) aufweist, wobei das System mindestens aufweist:
eine Makrozellen-Basisstation (109);
eine Kleinzellen-Basisstation (103) mit einer geringeren Abdeckung (101) als die der Makrozellen-Basisstation; und
eine Makrozellen-Basisstation-zu-Kleinzellen-Basisstation-Schaltzentrale (111), die mindestens eine Regel und/oder Richtlinie (104) für die Verwendung der mobilen Vorrichtung innerhalb der Kleinzelle speichert;
wobei die Kleinzellen-Basisstation (103) so konfiguriert ist, dass sie die mindestens eine Regel und/oder Richtlinie auf die Verwendung der mobilen Vorrichtung in der Kleinzelle anwendet und die mindestens eine Regel und/oder Richtlinie an die mobile Vorrichtung (102) überträgt, wenn die mobile Vorrichtung über die Kleinzelle mit dem Netzwerk verbunden ist, zur Annahme oder Ablehnung durch die mobile Vorrichtung;
**dadurch gekennzeichnet, dass**
die Schaltzentrale (111) konfiguriert ist, um die Verbindung des mobilen Geräts mit dem Netzwerk von der Kleinzelle zur Makrozelle umzuschalten, wenn die mobile Vorrichtung die mindestens eine Regel und/oder Richtlinie ablehnt.

2. System gemäß Anspruch 1, wobei die Schaltzentrale (111) ferner so konfiguriert ist, dass sie den Aufbau einer Verbindung der mobilen Vorrichtung mit dem Netz über die Makrozelle ermöglicht, wenn die mobile Vorrichtung nicht über die Kleinzelle mit dem Netz verbunden ist.

3. Verfahren zum Steuern der Verwendung einer mobilen Vorrichtung in einem heterogenen Netzwerk, wobei das heterogene Netzwerk zumindest eine Makrozelle mit einer Makrozellen-Basisstation (109), eine Kleinzelle mit einer Kleinzellen-Basisstation (103) mit einer geringeren Abdeckung als die Makrozellen-Basisstation (109) und eine Makrozellen-Basisstation-zu-Kleinzellen-Basisstation-Schaltzentrale (111) aufweist, die zumindest eine Regel und/oder Richtlinie (104) für die Verwendung der mobilen Vorrichtung innerhalb der Kleinzelle speichert, wobei das Verfahren zumindest aufweist:
Anwenden der mindestens einen Regel und/oder Richtlinie für die Verwendung der mobilen Vorrichtung innerhalb der Kleinzelle durch die Kleinzellen-Basisstation (204);
Übertragen der mindestens einen Regel und/oder Richtlinie durch die Kleinzellen-Basisstation an die mobile Vorrichtung (205), wenn die mobile Vorrichtung über die Kleinzelle mit dem Netzwerk verbunden ist, zur Annahme oder Ablehnung durch die mobile Vorrichtung (206);
**gekennzeichnet durch**:
Umschalten der Verbindung der mobilen Vorrichtung mit dem Netz von der Kleinzelle zur Makrozelle durch die Schaltzentrale, wenn die mobile Vorrichtung die mindestens eine Regel und/oder Richtlinie ablehnt (206b).

4. Verfahren gemäß Anspruch 3, das ferner aufweist, dass die Schaltzentrale (111) die Herstellung einer Verbindung der mobilen Vorrichtung mit dem Netz über die Makrozelle ermöglicht (203), wenn die mobile Vorrichtung nicht über die Kleinzelle mit dem Netz verbunden ist.

5. Verfahren gemäß Anspruch 3 oder Anspruch 4, das ferner aufweist: Herstellen (207) einer Kommunikation der mobilen Vorrichtung mit dem Netz über die Kleinzelle, wenn die mindestens eine Regel und/oder Richtlinie akzeptiert wird (206a).

6. Verfahren gemäß einem der Ansprüche 3 bis 5, wobei die mobile Vorrichtung zumindest eine Kamera aufweist, und das Einrichten der zumindest einen Regel und/oder Richtlinie zumindest das Verhindern der Verwendung der Kamera innerhalb der Abdeckung der Kleinzelle aufweist.

7. Verfahren gemäß einem der Ansprüche 3 bis 6, wobei die mobile Vorrichtung zumindest einen Lautsprecher aufweist, und das Einrichten der zumindest einen Regel und/oder Richtlinie zumindest das Versetzen der mobilen Vorrichtung in einen lautlosen Modus innerhalb der Abdeckung der Kleinzelle aufweist.

8. Verfahren gemäß einem der Ansprüche 3 bis 7, wobei die mobile Vorrichtung zumindest einen flugsicheren Modus aufweist, und das Einrichten der zumindest einen Regel und/oder Richtlinie zumindest das Versetzen der mobilen Vorrichtung in den flugsicheren Modus innerhalb des Abdeckungsbereichs der Kleinzelle aufweist.

9. Verfahren gemäß einem der Ansprüche 3 bis 8, wobei das Einrichten der mindestens einen Regel und/oder Richtlinie zumindest aufweist, dass die mobile Vorrichtung daran gehindert wird, Sprachanrufe und/oder Daten von innerhalb der Kleinzelle zu übertragen.

10. Computerprogrammprodukt, das Anweisungen aufweist, die, wenn das Programm von einem Prozessor einer Schaltzentrale ausgeführt wird, den Prozessor veranlassen, die entsprechenden Verfahrensschritte nach einem der Ansprüche 3 bis 9 auszuführen.

## Revendications

1. Système pour contrôler l'utilisation d'un dispositif mobile (102) dans un réseau hétérogène, dans lequel le réseau hétérogène comprend au moins une macrocellule (100) et une petite cellule (101), le système comprenant au moins :
une station de base de macrocellule (109) ;
une station de base de petite cellule (103) ayant une couverture (101) inférieure à celle de la station de base de macro-cellule ; et
un centre de commutation de station de base de macrocellule à station de base de petite cellule (111) stockant au moins une règle et/ou une politique (104) pour l'utilisation du dispositif mobile dans la petite cellule ;
dans lequel la station de base de petite cellule (103) est configurée pour appliquer la au moins une règle et/ou politique à l'utilisation du dispositif mobile dans la petite cellule et pour transmettre la au moins une règle et/ou politique au dispositif mobile (102) si le dispositif mobile est connecté au réseau via la petite cellule, pour acceptation ou rejet par le dispositif mobile ;
**caractérisé en ce que** :
le centre de commutation (111) est configuré pour commuter la connexion du dispositif mobile au réseau de la petite cellule à la macrocellule si le dispositif mobile rejette la au moins une règle et/ou politique.

2. Système selon la revendication 1, dans lequel le centre de commutation (111) est en outre configuré pour permettre l'établissement d'une connexion du dispositif mobile au réseau via la macrocellule si le dispositif mobile n'est pas connecté au réseau via la petite cellule.

3. Méthode de contrôle de l'utilisation d'un dispositif mobile dans un réseau hétérogène, dans laquelle le réseau hétérogène comprend au moins une macrocellule ayant une station de base de macrocellule (109), une petite cellule ayant une station de base de petite cellule (103) avec une couverture inférieure à celle de la station de base de macrocellule (109), et un centre de commutation de macrocellule-station de base à petite cellule-station de base (111) stockant au moins une règle et/ou une politique (104) pour l'utilisation du dispositif mobile à l'intérieur de la petite cellule, la méthode comprenant au moins :
l'application par la station de base de petite cellule (204) de la au moins une règle et/ou politique d'utilisation du dispositif mobile à l'intérieur de la petite cellule ;
transmettre par la station de base de petite cellule la au moins une règle et/ou politique au dispositif mobile (205), si le dispositif mobile est connecté au réseau via la petite cellule, pour acceptation ou rejet par le dispositif mobile (206) ;
**caractérisé en ce que** :
la commutation par le centre de commutation de la connexion du dispositif mobile au réseau de la petite cellule à la macrocellule, si le dispositif mobile rejette la au moins une règle et/ou politique (206b).

4. Méthode selon la revendication 3, comprenant en outre le centre de commutation (111) permettant (203) l'établissement d'une connexion du dispositif mobile au réseau via la macrocellule si le dispositif mobile n'est pas connecté au réseau via la petite cellule.

5. Méthode selon la revendication 3 ou la revendication 4, comprenant en outre l'établissement (207) d'une communication du dispositif mobile avec le réseau via la petite cellule si la au moins une règle et/ou politique est acceptée (206a).

6. Méthode selon l'une quelconque des revendications 3 à 5, dans laquelle le dispositif mobile comprend au moins une caméra, et l'établissement de la au moins une règle et/ou politique comprend au moins l'empêchement de l'utilisation de la caméra dans la couverture de la petite cellule.

7. Méthode selon l'une quelconque des revendications 3 à 6, dans laquelle le dispositif mobile comprend au moins un haut-parleur, et l'établissement de la au moins une règle et/ou politique comprend au moins le placement du dispositif mobile en mode silencieux dans la couverture de la petite cellule.

8. Méthode selon l'une quelconque des revendications 3 à 7, dans laquelle le dispositif mobile comprend au moins un mode de sécurité de vol, et l'établissement de la au moins une règle et/ou politique comprend au moins le placement du dispositif mobile en mode de sécurité de vol dans la couverture de la petite cellule.

9. Méthode selon l'une quelconque des revendications 3 à 8, dans laquelle l'établissement de la au moins une règle et/ou politique comprend au moins le fait d'empêcher le dispositif mobile de transmettre des appels vocaux et/ou des données depuis l'intérieur de la petite cellule.

10. Produit de programme informatique comprenant des instructions qui, lorsque le programme est exécuté par un processeur d'un centre de commutation, amènent le processeur à exécuter les étapes de la méthode de correspondance de l'une quelconque des revendications 3 à 9.
